# EUROPEAN PATENT APPLICATION

(11) **EP 4 810 920 A2**
(43) Date of publication of application: **23.09.2026**
(21) Application number: 26176919.4
(22) Date of filing: 04.08.2022
(51) Int. Cl.: G01F 15/00

(54) **DEVICE FOR MEASURING A FLUID**

(30) Priority: 06.08.2021 IT 202100021431
(62) Document number(s) of the earlier application(s) in accordance with Art. 76 EPC: 22762140.6 / 4 381 250
(71) Applicant: Pietro Fiorentini S.p.A., 36057 Arcugnano (VI) (IT)
(72) Inventor: CAODURO, Nicola, 36057 ARCUGNANO (VICENZA) (IT); ZAMPIERI, Nevio, 36047 MONTEGALDA (VICENZA) (IT)
(74) Representative: Braidotti, Andrea

(57) **Abstract**

Device (1) for measuring a fluid, preferably a gas, in particular of the type suitable for measuring the flow rate of gas or liquid circulating within a pipeline and through the device itself, comprising:
- a containment structure (7) which is provided with a first opening (9) for the inlet of the fluid inside it and a second opening (11) for the outlet of the fluid,
- said containment structure (7) being configured to define inside it a path (2) for the fluid between said first opening (9) and said second opening (11), said path (2) comprising:
- an internal tubular section (4) which extends in a substantially rectilinear way along a longitudinal axis X and which is in fluid communication with said first opening (9) for the inlet of the fluid, or with said second opening (11) for the outlet of the fluid,
- at least one external chamber (3) which is positioned around said tubular section (4) and which is in fluid communication with said second opening (11) for the outlet of the fluid, or with said first opening (9) for the inlet of the fluid,
- said at least one external chamber (3) being fluidly connected with said internal tubular section (4) at a zone of the internal tubular section (4) which is opposite to that at which said tubular section is in fluid communication with said first opening (9) for the inlet of the fluid, or with said second opening (11) for the outlet of the fluid,

- sensor means (5) configured to detect a quantity of the flow of said fluid that passes through said internal tubular section (4).

## Description

### TECHNICAL FIELD

The present invention relates to a device for measuring a fluid, preferably a gas, and in particular of the type suitable for measuring the flow of gas or a liquid present and circulating inside a pipeline, such as for example a pipeline of the distribution network of natural gas or other gases produced in a decentralized way, such as biomethane or hydrogen. Therefore, the invention finds advantageous use in the technical sector of the production and marketing of apparatuses and devices for measuring fluids, in particular gases, and is advantageously applicable in plants for the transport and distribution of gas (in particular natural gas, or hydrogen and/or hydrogen/natural gas mixtures, or other decentralized gases, such as biomethane).

In said plants, the measuring devices, in particular of the gas flow rate, are used to measure and/or monitor and count the gas consumption.

Conveniently, the device according to the invention can be used to measure the flow of a liquid, for example of water.

### STATE OF THE ART

Many types of measuring devices are known in the reference technical sector and among these there are ultrasonic, turbine, rotary and calibrated orifice devices.

In particular, the known devices for measuring gas are provided with a passage tube, which is configured to allow the passage of the gas to be measured, and comprise at least one sensor associated with the passage tube for measuring and detecting quantities of the gas itself.

The devices for measuring gas, and in particular for measuring the flow rate, are generally classified on the basis of their nominal internal diameter, i.e. the nominal diameter of the pipe in which the device will be installed, known in the technical jargon of the sector with the acronym "DN".

As is known, each type of measuring device requires a corresponding length of straight sections of pipe provided before and after the device itself, and this in order to ensure homogeneity of the flow inside the pipe and thus ensure an optimal measurement accuracy independently of the flow conditions that may arise before and after the device, for example due to curves present in the pipeline or due to changes in the section of the pipe itself.

In particular, this need is envisaged in the reference regulations typically applied, such as MID (Directive 2014/32/EU) and OIML R137.

Generally, the length of the straight sections to be provided before and after the measuring device is catalogued as a multiple of the aforementioned nominal internal diameter DN.

Typically, the length used in the aforementioned devices for measuring the natural gas flow rate in the distribution networks is 10DN before (i.e. upstream) of the device and 5DN after (i.e. downstream) of the device itself. These lengths of the straight sections are very significant in terms of dimensions within a gas transport network and, therefore, are normally used in applications where the spaces and the configuration of the lines themselves allow it.

Furthermore, the aforesaid lengths of the straight sections are used for applications in which, given the large flow rates and corresponding large volumes of transported gas, a measurement accuracy of even less than 0.5% is required. In more detail, such high accuracy is possible only with a perfect distribution of the flow inside the pipeline, which is now guaranteed by the aforementioned straight sections, possibly and usually associated with specific flow conditioners, i.e. inserts installed at the inside the pipeline in order to evenly distribute the flow inside the pipeline itself.

It is therefore evident that known types of devices for measuring gas have proved to be not free from drawbacks in practice and, in particular, are not suitable for installation in gas distribution networks, in particular at final pressure reduction stations (also known as "PRS"), where it has to be considered that the requirements for accuracy of the measurement are not as stringent as those required for transport networks.

The main drawback lies in that known devices require long straight sections of upstream and downstream piping in order to be installed, which sections are not always available in the distribution networks and, in particular at the final pressure reduction stations (also known as "PRS"), thus inevitably requiring a change to the geometry of the distribution unit.

A further drawback lies in that, where the geometry of the distribution network does not allow the installation of the known type device and where there is not even the possibility to modify it (think for example of an underground distribution network that extends in proximity to concrete constructions that constrain its geometry), it is necessary to renounce the installation of the device in order to search for a section of the network in which such installation is possible.

EP2146189 describes an ultrasonic measuring device consisting of a first piece with two flanges, for connection respectively to an upstream section of pipe and to a downstream section of pipe, and of a second double-pipe piece with an external wall and an internal wall which define an external annular inflow zone from an internal cylindrical outflow zone. In the fitting section between the first piece and the second piece there is provided an arched wall which diverts the flow entering the device, and also diverts the flow leaving the device. The ultrasonic measurement area, with the ultrasonic transducers, is provided in the terminal part of the internal cylindrical outflow zone, immediately upstream of the section in which the outgoing flow is diverted by the arched wall.

US4140012 describes an ultrasonic flowmeter consisting of a rectangular housing body made in a single piece and provided with two ends opposite to each other and also with two openings opposite to each other, respectively for the inlet and outlet of the fluid to be measured. Inside the housing body an internal tube which is supported by an unperforated wall, inclined by 45° with respect to the tube itself, which defines two zones which are connected respectively with the inlet opening and with the outlet opening and which are in communication with each other only through the passage defined inside the internal tube, in mounted. The ultrasonic sensors are mounted at said two ends of the housing body, thus being mounted respectively upstream and downstream with respect to the passage defined by the internal tube and thus transmitting ultrasonic signals which are directed along the direction of axial extension of said internal tube.

EP3296704 describes a flowmeter comprising a joining base with openings for the fluid inlet and outlet respectively, an external housing cap and a traditional flow sensor which are mounted, separately and independently from each other, on the joining base. The inlet opening communicates with an external annular chamber defined between the cap and the external walls of the tubular section, while the outlet opening communicates with an internal tubular chamber which is defined inside the flow sensor. The fluid flow entering the inlet opening first rises passing through the entire external annular chamber, then descends passing through the entire internal tubular chamber, and then exits through the outlet opening.

US2016/282164 describes a solution for measuring the flow rate of a fluid through a duct. In particular, the solution provides for the use of a unit for diverting the flow which consists of a sealed tank having an inlet portion connected to the inlet duct, an outlet portion connected to the outlet duct, and a diverting portion comprising an internal tubular element provided with flow measuring means and a section being also provided for connecting the tubular element to the outlet duct.

### OBJECTS OF THE INVENTION

The object of the invention is to propose a device for measuring gas which allows to overcome, at least in part, the aforesaid drawbacks present in the solutions of the aforementioned prior art.

Another object of the invention is to propose a device that can be installed in any section of a gas distribution network, in particular at a final pressure reduction station.

Another object of the invention is to propose a device which obviates the need to modify the geometry of the distribution network for its installation.

Another object of the invention is to propose a device that satisfies the regulatory requirements for the accuracy of the measurement, in particular of the gas flow rate.

Another object of the invention is to propose a device which is structurally and functionally completely reliable.

Another object of the invention is to propose a device which is an improvement and/or alternative to the traditional ones.

Another object of the invention is to propose a device which has high safety and operability standards.

Another object of the invention is to propose a device which can be manufactured simply, quickly and at low costs.

Another object of the invention is to propose a device whose maintenance can be carried out simply, quickly and at low costs.

Another object of the invention is to propose a device which can be assembled in a simple and rapid way.

Another object of the invention is to propose a device which has an alternative characterization, both in constructive and functional terms, with respect to traditional ones.

### SUMMARY OF THE INVENTION

One or more of the objects mentioned herein, considered both individually and in any combination thereof, and others that will result from the following description are achieved, according to the invention, with a device as defined in claim 1.

The present invention relates to a device (1) for measuring a fluid, preferably a gas, in particular of the type suitable for measuring the flow rate of gas or liquid circulating within a pipeline and through the device itself, comprising:
- a containment structure (7) which is provided with a first opening (9) for the inlet of the fluid inside it and a second opening (11) for the outlet of the fluid,
- said containment structure (7) being configured to define inside it a path (2) for the fluid between said first opening (9) and said second opening (11), said path (2) comprising:
   - an internal tubular section (4) which extends in a substantially rectilinear way along a longitudinal axis X and which is in fluid communication with said first opening (9) for the inlet of the fluid, or with said second opening (11) for the outlet of the fluid,
   - at least one external chamber (3) which is positioned around said tubular section (4) and which is in fluid communication with said second opening (11) for the outlet of the fluid, or with said first opening (9) for inlet of the fluid,
   - said at least one external chamber (3) being fluidly connected with said internal tubular section (4) at a zone of the internal tubular section (4) which is opposite to that at which said tubular section is in fluid communication with said first opening (9) for the inlet of the fluid, or with said second opening (11) for the outlet of the fluid,
- sensor means (5) configured to detect a quantity of the flow of said fluid that passes through said internal tubular section (4),
and wherein said containment structure (7) comprises:
- a first body (30) in which said first opening (9) and said second opening (11) are formed and which is configured to be mechanically connected between an upstream pipe and a downstream pipe that are external to said device (1),
- a second body (31) in which said sensor means (5) are mounted,
and wherein:
- said internal tubular section (4) which extends substantially rectilinearly along the longitudinal axis X is defined and/or formed partly in said first body (30) and partly in said second body (31),
- said at least one external chamber (3) being defined and/or formed, at least in part, in said second body (31).

Preferably, said at least one external chamber (3) extends, at least in part, externally around the internal tubular section (4) and parallel with respect to said longitudinal extension axis (X) of the internal tubular section (4).

Preferably, said containment structure (7) is configured so that the fluid passes through the internal tubular section (4) in a direction of travel (V2) which is substantially opposite to the direction of travel (V1) with which the fluid passes through said at least one chamber (3).

Preferably, said first inlet opening (9) is in direct fluidic communication with said at least one external chamber (3) while said second outlet opening (11) is in direct fluidic communication with the internal tubular section (4), so that the flow of fluid first passes through said at least one external chamber (3) and then said internal tubular section (4).

Preferably, said first inlet opening (9) is in direct fluidic communication with said internal tubular section (4) while said second outlet opening (11) is in fluidic communication with said at least one external chamber (3), so that the fluid flow first passes through said internal tubular section (4) and then said at least one external chamber (3).

Preferably, said containment structure (7) comprises an internal wall (8), substantially tubular in shape, which internally delimits said internal tubular section (4), while said at least one external chamber (3) is defined externally around said internal wall (8).

Preferably, the device comprises at least two external chambers (3) for the subdivision of the fluid flow, said at least two external chambers (3) extending around the internal tubular section (4) and being all in fluid communication with said second opening (11) for the outlet of the fluid, or with said first opening (9) for the inlet of the fluid, and with the same internal tubular section (4).

Preferably, the device comprises, inside the containment structure (7), means (29) for conditioning the flow of the fluid along the path (2) defined inside the containment structure (7).

Preferably, said means (29) for conditioning the flow of the fluid comprise at least one upstream flow conditioner (25) which is mounted at the internal tubular section (4) upstream of the sensor means (5).

Preferably, the device comprises at least one upstream flow conditioner (25') which is mounted externally around the internal tubular section (4), preferably at the inlet mouth of said internal tubular section.

Preferably, the device comprises at least one upstream flow conditioner (25", 25‴) which is mounted inside the internal tubular section (4).

Preferably, said sensor means (5) are of the ultrasonic type and are mounted on said second body (31) so that the ultrasonic signal passes through the tubular section (4) along a direction which is angled with respect to the longitudinal extension direction X of the tubular section (4).

Preferably, said sensor means (5) comprise at least one ultrasonic emitter (5') and at least one ultrasonic receiver (5") which are mechanically mounted on a wall (8) which internally delimits said internal tubular section (4), said at least one ultrasonic emitter (5') is configured to generate at least one ultrasonic signal inside said internal tubular section (4), along a detection direction (Z), angled with respect to the longitudinal extension axis of the internal tubular section (4).

Preferably, said external chamber (3) is in direct fluid communication with said second opening (11) for the outlet of the fluid.

Preferably, the inlet/upstream mouth the tubular section (4) is in fluidic connection with the first opening (9) for the gas inlet, while the outlet/downstream mouth of the tubular section (4) is in fluidic connection with the external chamber (3).

Preferably, said at least one part (40) of the tubular section (4) which is obtained and/or defined in said first body (30) is positioned upstream with respect to the sensor means (5).

Preferably, said at least one external chamber (3) is obtained and/or defined, at least in part, also in said first body (30).

Preferably, said second body (31) can be mechanically associated in a removable way to said first body (30).

Preferably, said second body (31) is associated with the first body (30) by means of mechanical fixing means of a removable type which are accessible and/or operable from the outside of the device (1).

Preferably, said internal tubular section (4) comprises a first part (40) which is defined and/or formed in said first body (30) and a second part (41) which is defined in said second body (31), said first part (40) and said second part (41) being coaxial and consecutive to each other.

Preferably, said first opening (9) for the gas inlet is in fluidic connection with the inlet/upstream mouth of the tubular section (4) by means of a further external annular chamber (39).

Preferably, said further external annular chamber (39) is entirely formed only in the first body (30).

Preferably, at least one upstream flow conditioner (25') is housed in said further external annular chamber (39).

Preferably, said sensor means (5) are mounted in corresponding through seats (82) obtained in the second body (31) of the containment structure (7) so as to pass through the external annular chamber (3) until it reaches the inside of the tubular section (4), to thus measure the gas that/when it passes through said tubular section (4).

Preferably, the through seats (82) for the sensor means (5) are closed from the outside by a covering element (83) which is configured to be associated in a mechanically removable way with the second body (31) of the containment structure (7).

Preferably, the device comprises a pressure sensor (80) operatively mounted on the structure (7) so as to measure the pressure of the gas that passes through the internal tubular section (4).

Preferably, the device comprises at least one temperature sensor (81) operationally mounted on the structure (7) so as to measure the temperature of the gas that passes through the internal tubular section (4) and/or that passes through the external annular chamber (3).

Preferably, said first opening (9) and said second opening (11) are mutually aligned along an axis Y which is angled, preferably perpendicular, with respect to the longitudinal axis X of extension of the internal tubular section (4).

### DESCRIPTION OF THE FIGURES

The invention is further clarified hereinafter in some of its preferred practical embodiments reported for purely exemplifying and non-limiting purposes with reference to the attached drawings, wherein:

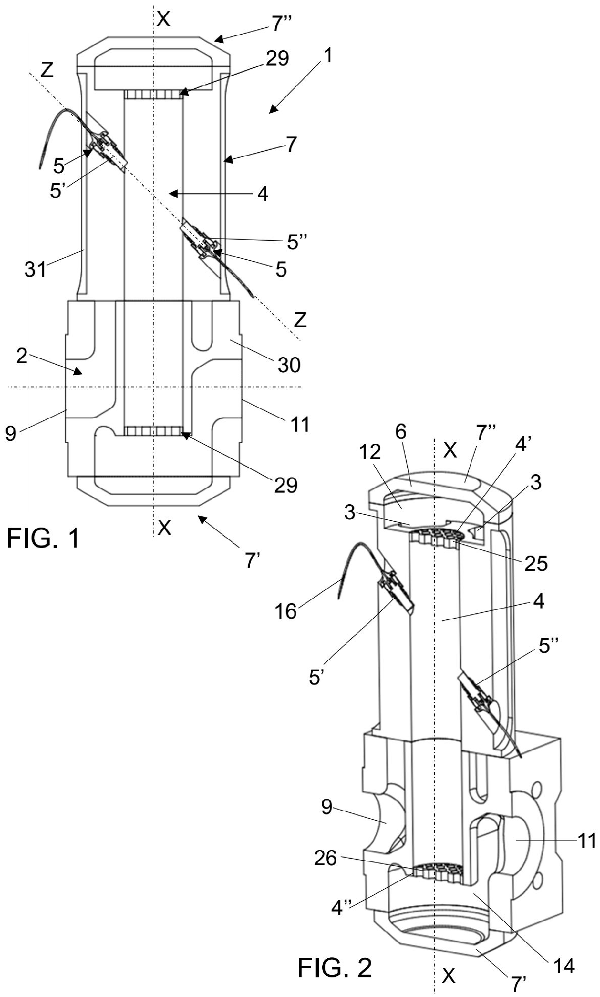

- Figure 1: shows a front view in longitudinal section of the device for measuring gas according to the invention,
- Figure 2: shows a front perspective view in longitudinal section of the device;

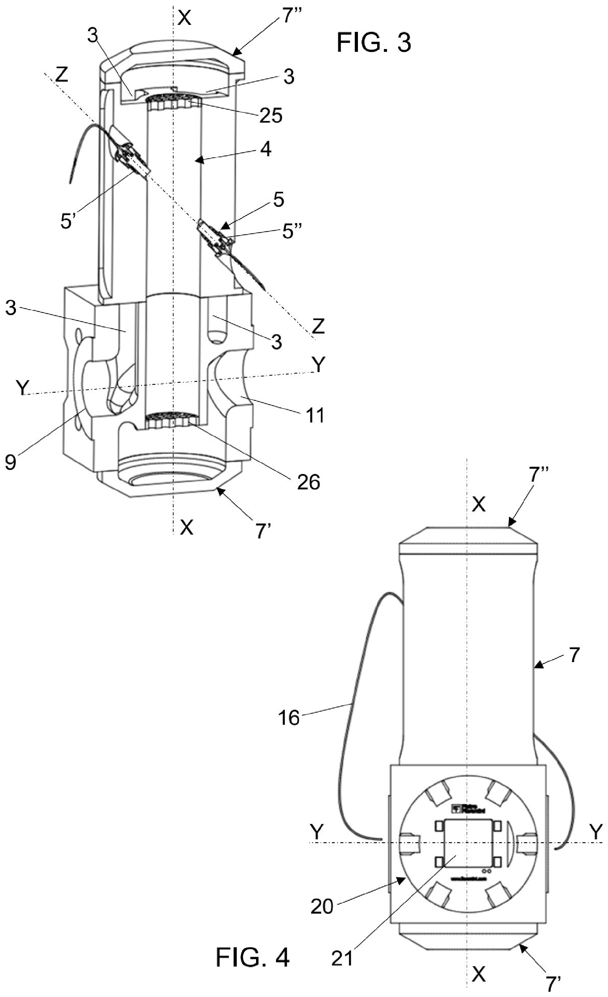

- Figure 3: shows a second front perspective view in longitudinal section of the device;
- Figure 4: shows a side view of the device;

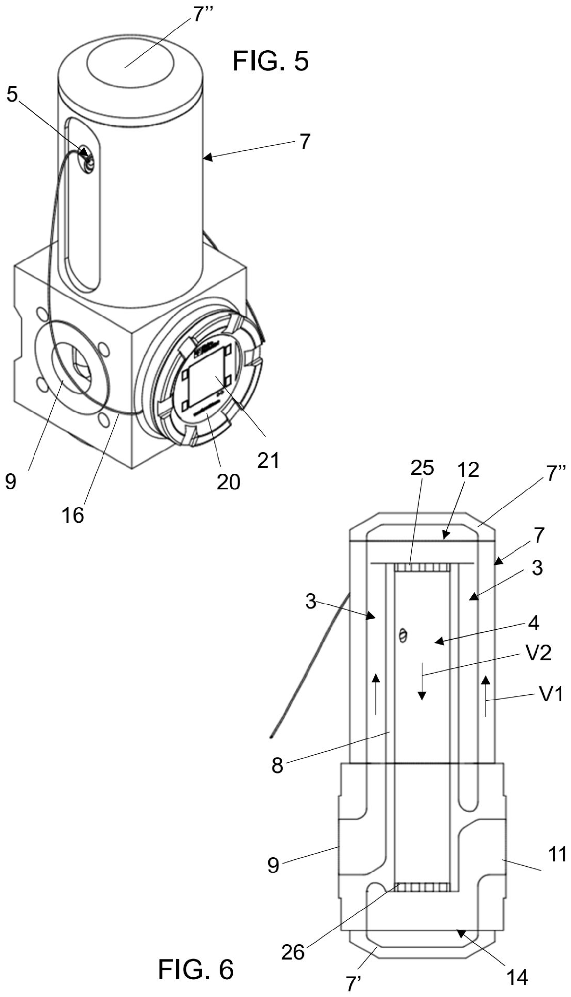

- Figure 5: shows a side perspective view of the device;
- Figure 6: shows a longitudinal sectional side view of the device for measuring gas according to the invention,
- Figure 7: shows a longitudinal sectional side perspective view of the device for measuring gas according to the invention,
- Figure 8: shows a sectional perspective view of the device according made along a horizontal section line;

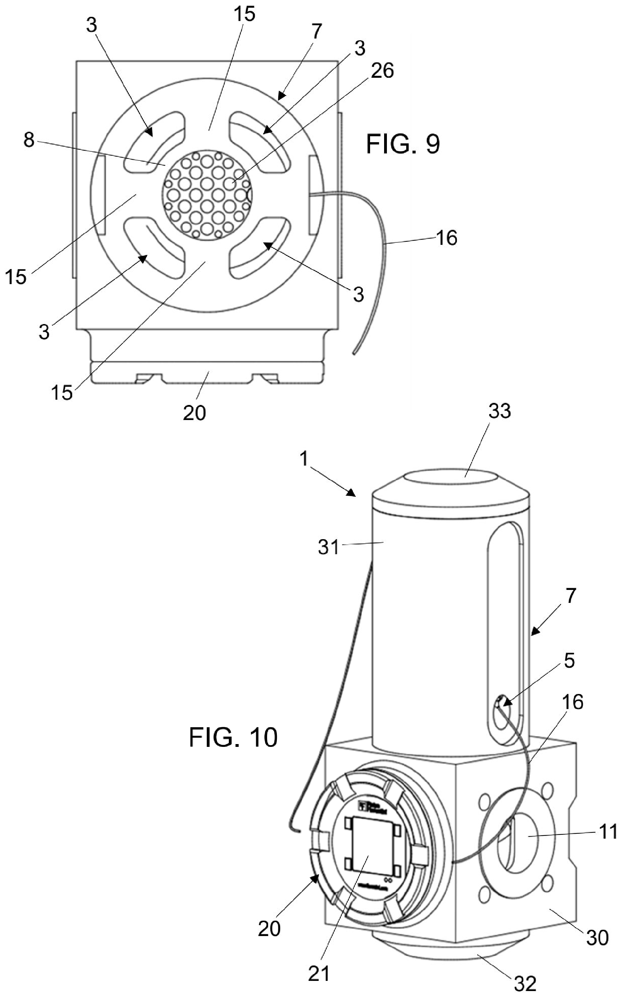

- Figure 9: shows a top view of the device in the sectional view of figure 8;
- Figure 10: shows a perspective view of the device according to the invention.
- Figure 11: shows a front view in longitudinal section of a first embodiment of the device for measuring gas according to the invention,
- Figure 12: shows a front view in longitudinal section of a second embodiment of the device for measuring gas according to the invention,
- Figure 13: shows a perspective view of a third embodiment of the device for measuring gas according to the invention,
- Figure 14: shows a front view of the device of Fig. 13,
- Figure 15: shows the device of Fig. 13 according to a different front view, and with the cover element of the seats of the sensor means removed,
- Figure 16: shows the device according to section XVI-XVI of Fig. 15, and
- Figure 17: shows the device according to section XVII-XVII of Fig. 16.

### DETAILED DESCRIPTION OF THE INVENTION AND OF SOME OF ITS PREFERRED EMBODIMENTS

The present invention relates to a device for measuring gas which has been identified as a whole with the reference 1 in the attached figures.

Advantageously, the device 1 according to the invention is suitable for use and installation in gas distribution networks, in particular in the distribution networks of natural gas or other gases produced in a decentralized way (such as biomethane or hydrogen), in order to detect the gas flow rate passing through the device itself.

Preferably, the device 1 according to the invention is suitable for use and installation at the final pressure reduction stations (PRS) provided in the gas distribution network.

Conveniently, the use of the device 1 for measuring gas is described below, however it is understood that the device 1 according to the invention can also be used for measuring a liquid, for example water.

As can be seen from the figures, the device 1 according to the invention is of the type configured to perform a series of measurements on the gas that passes through said device. Preferably, the device 1 can be of the type generally used as a meter or measurement device of the flow of gas which passes through the section of a pipe on which said device is installed.

In particular, the device 1 according to the invention is configured to be passed through by a flow of gas.

Conveniently, the device 1 can be associated to a gas inlet, for example defined by a pipe section upstream of the device, and to a gas outlet, for example defined by a pipe section downstream of said device.

Conveniently, the device 1 is provided with a containment structure 7 in which the following are defined:
- a first opening 9, which is fluidly in communication with the inlet, to thus allow the gas to enter inside said structure, and
- a second opening 11, which is fluidly in communication with the outlet, to allow the gas, which has entered/circulated in said structure, to escape from the latter.

Preferably, at the first opening 9 and/or the second opening 11, mechanical connection means can be provided, for example flanged portions, for connection with upstream and downstream pipes (not shown) which are external to the device 1.

Preferably, the containment structure 7 is airtight to prevent gas escaping to the outside. Preferably, the containment structure 7 is formed by two or more parts joined together in such a way as to guarantee the airtightness of the entire structure. Preferably, the containment structure 7 is made of metal.

The device 1 for measuring gas according to the invention is in particular of the type suitable for measuring the flow of gas present and circulating inside a pipe.

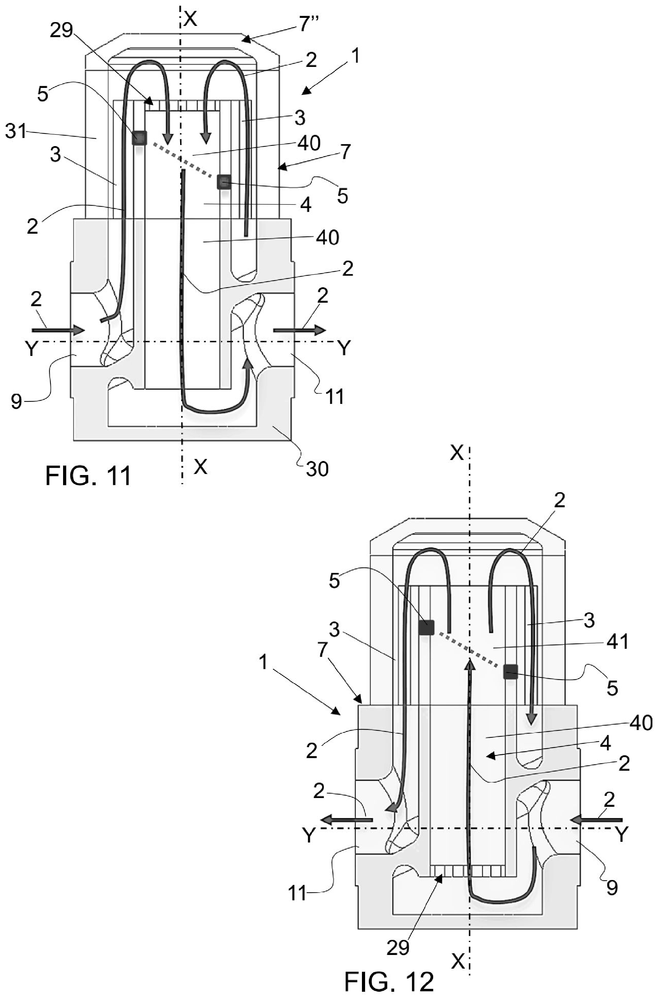

Conveniently, said containment structure 7 internally defines a path 2 for said gas which comprises:
- an internal tubular section 4 which extends along a longitudinal axis X and which is in fluid communication with said first opening 9 for the gas inlet (see Fig. 12), or with said second opening 11 for the gas outlet (see fig. 11),
- at least one external chamber 3, preferably at least two external chambers 3, which is/are positioned around said tubular section 4 and which is/are in fluid communication with said second opening 11 for the gas outlet (see fig. 12), or with said first opening 9 for the gas inlet (see fig. 11).

Conveniently, said at least one external chamber 3 is fluidically connected with the internal tubular section 4 at a zone of the latter which is opposite to that at which the tubular section itself is in fluid communication with the first opening 9 for the gas inlet, or with the second opening 11 for the gas outlet.

Conveniently, the containment structure 7 extends along a prevalent extension axis which corresponds to the longitudinal extension axis X of the internal tubular section 4.

Obviously, the device 1 can be installed in the pipeline in such a way that the second opening 11 is configured for the gas inlet and the first opening 9 is configured for the gas outlet, without thereby departing from the scope of protection of this patent.

This patent text has been drawn up with the convention assumed that the gas passes through the device 1 from the first opening 9 to the second opening 11 in an exemplary and non-limiting manner, in order to describe the preferential embodiment solution, however it should be understood that the gas could pass through the device entering the second opening 11 and exiting the first opening 9.

Conveniently, in a possible embodiment not shown, the device 1 can comprise a single chamber 3, preferably having a substantially annular cross section, which is arranged around to the internal tubular section 4, preferably having a cross section which is substantially circular.

Advantageously, the device 1 can comprise two or more chambers 3 that extend externally around the same tubular section 4 and are all in fluid communication with the latter. Conveniently, this allows the gas flow entering or leaving the tubular section 4 to be divided among the various chambers 3. Advantageously, the external chambers 3 extend around the same and only tubular section 4 of said path 2 for said gas. Conveniently, said at least one external chamber 3 is arranged concentrically around the internal tubular section 4. Conveniently, said at least two or more chambers 3 are circumferentially side by side and are arranged around the same and single tubular section 4.

Preferably, each external chamber 3 of the gas path 2 inside the structure 7 extends, at least in part, parallel to the internal tubular section 4.

Preferably, the internal tubular section 4 of the path 2 of the gas inside the structure 7 is substantially straight and extends along the prevailing extension axis of the containment structure itself.

Preferably, each external chamber 3 extends externally with respect to the tubular section 4 of the path 2.

Conveniently, the containment structure 7 is configured so that the gas passes through the internal tubular section 4 in a direction of travel V2 which is substantially opposite to the direction of travel V1 with which the gas passes through said at least one chamber 3.

Preferably, the tubular section 4 has a substantially circular cross-section. Preferably, the cross section of the internal tubular section 4 is constant along its entire longitudinal extension.

Advantageously, the device 1 comprises sensor means 5 which are mounted inside the structure 7 so as to detect a quantity of the gas flow that passes through the tubular section 4. Preferably, for this purpose, the sensor means 5 are operatively associated with said tubular section 4.

In this way, the gas flow entering the device 1 is forced to pass through - upstream (see fig. 12) or downstream (see fig. 11) with respect to the pass through of the external chamber 3 - the internal tubular section 4 of the path 2 of the gas, which is straight and allows the gas to dissipate any inhomogeneities developed during the inlet in the device 1, thus allowing the sensor means to detect a reliable and highly accurate flow rate value.

Therefore, the device 1 according to the invention obviates the known need to provide long rectilinear distances of the network and piping upstream and/or downstream of the device 1 itself, since the provision of the path 2 inside the structure 7 allows to standardize and homogenize the flow regardless of the geometry of the network in proximity of the device 1 itself.

Preferably, the sensor means 5 comprise sensors of the ultrasonic type, in particular for detecting the gas flow rate. Preferably, the sensor means 5 comprise sensors of the static type, of the ultrasonic or thermomassic type.

Preferably, the containment structure 7 comprises a first body 30 in which said first opening 9 and said second opening 11 are formed, and a second body 31 - which thus defines or incorporates the measuring module - in which the sensor means 5 are mounted.

Preferably, the containment structure 7 is constituted by said first body 30, which is closed at one end by a first lid 32, and by said second body 31, which is closed at one end by a second lid 33.

Preferably, the first body 30 is made in a single (first) piece and the second body 31 is made in a single (second) piece.

Preferably, the first body 30 and the second body 31 are made of metallic material.

Conveniently, the first body 30 and the second body 31 can be constituted by corresponding pieces in metallic material (for example obtained by molding), inside which passages for the gas (in the form of tubular sections or chambers) and a series of cavities or holes for housing various functional components, and in particular for the sensor means 5, are obtained.

Preferably, the first body 30 - in which said first opening 9 and said second opening 11 are formed - defines the connection module of the device 1 with the upstream and downstream pipes (not shown) which are external to the device 1.

Preferably, the second body 31 - in which the sensor means 5 are mounted - defines the measurement module of the device 1.

Conveniently, the first body 30 - which comprises said first opening 9 and said second opening 11 for connection with the upstream and downstream pipes (not shown) which are external to the device 1 - is superimposed on the second body 31 which includes the sensor means 5 (thus defining or incorporating the measuring module). Preferably, the second body 31 is superimposed/aligned with the first body 30 along the extension axis X which is perpendicular to the axis Y which passes through the first opening 9 and the second opening 11. Conveniently, the second body 31 is not housed - and in particular it is not entirely housed - inside the first body 30.

Preferably, the second body 31 - defining or incorporating the measuring module - is removably associated with the first body 30 which is provided with the first opening 9 and with the second opening 11 and which is intended to be mechanically connected with upstream and downstream pipes (not shown) which are external to the device 1. Preferably, said second body 31 - which defines or incorporates the measurement module - is associated with the first body 30 by means of mechanical fixing means of a removable type (for example screws or the like) which, advantageously, can be accessed or activated/activated from the outside of the device 1. This results is advantageous as it allows the measurement module to be removed to perform its calibration (or recalibration) without having to decouple (in particular at the flanged portions) the first body 30 from the upstream and downstream pipes, the latter being a particularly long and laborious operation, especially in the reintegration phase; therefore, in this way, by removing only the second body with the measuring module the need to remove and then reinsert the first body between the upstream and downstream pipes is avoided; furthermore, advantageously, while the recalibration of the measuring module of the second body which has been removed is being carried out, it is in the meantime possible to mount a further second body with its own/further measuring module on the first body, thus allowing to avoid prolonged interruptions of the operational functioning of the device 1.

Conveniently, the second body 31 with the measuring module can be screwed to the first body 30, or vice versa, and/or they can be mechanically connected to each other by means of traditional mechanical fixing members (for example screws or bolts) which pass through one of said bodies engaging in corresponding seats obtained in the other body.

Advantageously, in the area of mutual contact between the two bodies, sealing means can be provided.

Conveniently, the internal tubular section 4 and said at least one external chamber 3 can be obtained both in the first body 30 and in the second body 31. Conveniently, the containment structure 7 can comprise two respective lids 32 and 33 which respectively engage with the first body 30 and with the second body 31 to close the second body 31 at the top so as to define a first manifold 12 and a second manifold 14, as described below in greater detail.

Preferably, said containment structure 7 extends along said prevalent extension axis X between a first end 7' and a second end 7", advantageously opposite the first end 7'.

Advantageously, the path 2 of the gas - which is defined inside the containment structure 7 - is configured in such a way that in said external chamber 3 the gas is moved in a first direction of travel V1 between said first end 7' and said second end 7" and in said tubular section 4 said gas is moved in a second direction of travel V2 substantially opposite to said first direction of travel V1.

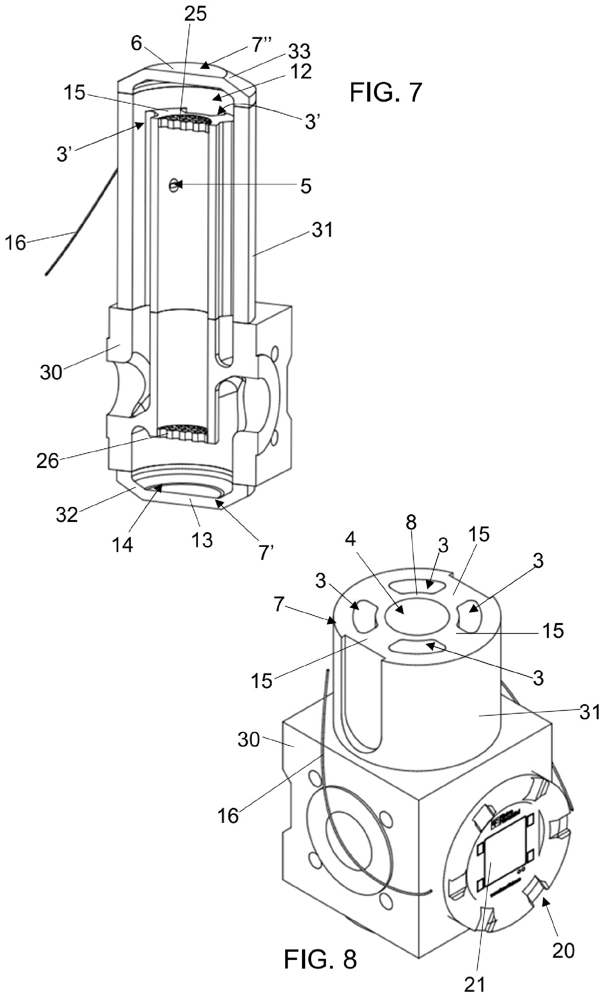

In accordance with a possible embodiment (see fig. 7), the first direction of travel V1 of the gas in the external chamber 3 goes from the first end 7' towards the second end 7" of the containment structure 7 while the second direction of travel V2 of the gas in the tubular section 4 goes from the second end 7" towards the first end 7'.

Advantageously, said first opening 9 is formed near said first end 7' of said containment structure 7 and the chamber 3 of said path 2 extends between said first opening 9 and a bottom wall 6 provided near said second end 7".

Advantageously, said containment structure 7 comprises an internal wall 8, substantially tubular in shape, which extends along the longitudinal extension axis X and which internally defines said tubular section 4 of said path 2 for said gas.

Preferably, said internal wall 8 extends around the longitudinal extension axis X which passes through the center of the tubular section 4.

Advantageously, said tubular section 4 of said path 2 extends between a third opening 4' of said internal wall 8, provided facing said bottom wall 6, and a fourth opening 4" of said internal wall 8, opposite said third opening 4' and placed in fluid connection with said second opening 11.

Advantageously, the tubular section 4 is defined between the third opening 4' and the fourth opening 4" of the internal wall 8.

Advantageously, the device 1 comprises, inside the containment structure 7, means 29 for conditioning the flow of gas along the path 2 defined inside the containment structure 7.

Conveniently, said means 29 for conditioning the flow comprise at least one upstream flow conditioner 25 and/or at least one downstream flow conditioner 26, positioned upstream and downstream with respect to the sensor means 5, respectively.

Advantageously, the device 1 comprises at least one upstream flow conditioner 25 which is positioned at the upstream tubular section 4 (according to the pass through direction of the gas inside the tubular section 4) with respect to the sensor means 5. Preferably, said at least one upstream flow conditioner 25 can be mounted at the inlet of the tubular section 4.

Preferably, said at least one upstream flow conditioner 25 - which is indeed positioned upstream with respect to the sensor means 5 - can be mounted inside the internal tubular section 4 and/or can be mounted externally around the internal tubular section 4.

Preferably, said at least one upstream flow conditioner 25 - which is indeed positioned upstream with respect to the sensor means 5 - can be mounted inside the internal tubular section 4 at the inlet mouth of said internal tubular section element 4 and/or at a more internal position with respect to the inlet mouth of said tubular section (but always upstream with respect to the sensor means 5).

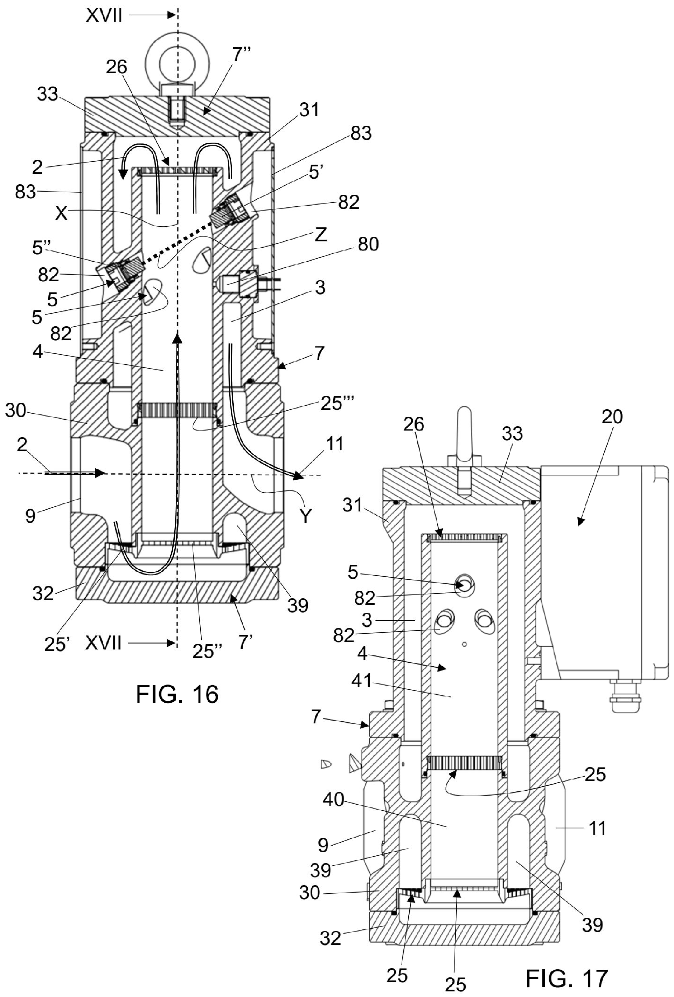

Advantageously, in the embodiment shown in Figures 16 and 17, three upstream flow conditioners 25 are provided (all positioned upstream with respect to the sensor means 5) and, in particular, there are provided a first upstream flow conditioner 25' which is externally mounted around the internal tubular section 4, a second upstream flow conditioner 25" which is mounted inside the internal tubular section 4 at its inlet mouth, and a third upstream flow conditioner 25" which is mounted inside the internal tubular section 4 in a more internal position with respect to the inlet mouth of the section itself.

Preferably, the first upstream flow conditioner 25' to be mounted externally around the tubular section 4 and the second upstream flow conditioner 25" to be mounted inside the tubular section 4, and both at the inlet mouth, can be made in a single piece which, advantageously, can be configured to be held between the inlet mouth of the tubular section 4 and the walls that delimit the internal passages/chambers of the body 30 and/or the lid 32.

Preferably, said upstream flow conditioner 25 can be provided at the third opening 4' and, in particular, it can be placed to intercept the gas passing through the third opening 4' and in particular at the inlet to the tubular section 4 of path 2.

Advantageously, the device 1 comprises at least one downstream flow conditioner 26 which is positioned at the downstream tubular section 4 (according to the pass through direction of the gas inside the tubular section 4) with respect to the sensor means 5. Preferably, said at least one downstream flow conditioner 26 is mounted at the outlet mouth of the tubular section 4.

Preferably, the device 1 comprises, at the fourth opening 4", a downstream flow conditioner 26, placed to intercept the gas passing through the fourth opening 4" and in particular outgoing from the tubular section 4 of path 2.

Advantageously, the upstream 25 and/or downstream 26 flow conditioner comprises a plurality of through holes, designed to allow the passage of said gas and at the same time to uniform the flow respectively at the inlet and/or outlet in/from the tubular section 4 of the path 2.

Conveniently, a flow conditioner can be provided (for example the upstream flow conditioner 25‴) which is positioned inside the tubular section 4 at a central area of the latter, in particular at an area between the inlet mouth and the outlet mouth of the tubular section itself.

Therefore, advantageously, the joint action of the linearity of the tubular section 4 of the path 2 for the gas and the provision of at least one flow conditioner 25 and/or 26 allows to ensure a homogeneity and uniformity of the gas flow that passes in the tubular section 4, i.e. in front of the sensor means 5, thus ensuring a high measurement accuracy, in particular of the flow rate.

Conveniently, a first manifold 12, configured to receive the gas leaving each chamber 3 of the path 2 and channel it towards the tubular section 4 of the path itself, is defined between the bottom wall 6 and the third opening 4'.

Advantageously, the first manifold 12 is configured to cause a deviation of the gas flow of about 180° in the passage between each chamber 3 and the internal tubular section 2.

Conveniently, the concentric arrangement of at least one chamber 3 around the straight longitudinal axis X of the internal tubular section 4 allows to decouple/separate the flow that crosses the chamber 3 from that which passes through the straight internal tubular section 4 and this without providing for the need to use U-shaped tubular fittings and also eliminating the disturbances caused by the curved sections that, in traditional solutions, are positioned upstream of the measuring devices.

Conveniently, the concentric arrangement of two or more chambers 3 around the rectilinear longitudinal axis X of the internal tubular section 4 allows to divide the gas flows upstream or downstream of said internal tubular section 4.

Conveniently, between a second bottom wall 13, provided at the first end 7' of the containment structure 7, and the fourth opening 4" a second manifold 14 is defined configured to receive the gas leaving the tubular section 4 of the path 2 and channel it towards the second opening 11 of the containment structure 7, and from here towards the downstream pipeline in which the device 1 is installed.

Advantageously, each chamber 3 is defined between said internal wall 8 and an internal surface of said containment structure 7. Preferably, the internal surface of said containment structure 7 is advantageously substantially cylindrical.

Conveniently, the internal wall 8 is equipped externally with ribs 15, which protrude towards the internal surface of the containment structure 7 to thus define two or more chambers 3 which extend parallel to each other and to the prevailing extension axis X. Therefore, each chamber 3 of the path 2 is defined between the ribs 15 and the internal surface of the containment structure 7.

Advantageously, in a possible embodiment, the path 2 of the gas inside the device 1, and in particular inside of the containment structure 7, can first provide for the subdivision of the inlet flow into several sub-flows which cross the respective external chambers 3 and, subsequently, the merging of the divided sub-flows into a single flow for the pass through of the internal tubular section 4 (see fig. 11).

Advantageously, in a possible embodiment, the path 2 of the gas inside the device 1, and in particular inside the containment structure 7, can first provide for the pass through of the internal tubular section 4 and subsequently the subdivision of the flow in various sub-flows that pass through respective external chambers 3, to then merge again in a single flow to come out through the second opening 11 (see fig. 12).

Preferably, in a possible embodiment (see fig. 12 - 17), the external chamber 3 is in direct fluidic connection with the second opening 11 for the gas outlet.

Preferably, in a possible embodiment (see fig. 12 - 17), the inlet/upstream mouth of the tubular section 4 is in fluidic connection with the first opening 9 for the gas inlet, while the outlet/downstream of the tubular section 4 is in fluidic connection with the external chamber 3 which is then in direct fluidic connection with the second opening 11 for the gas outlet. Therefore, the path 2 of the gas that enters the device 1 from the first opening 9 first passes through the tubular section 4 and then the external chamber 3, to exit the device 1 at the second opening 11.

Conveniently, the external chamber 3 is obtained/defined at least partly in the second body 31. Conveniently, the external chamber 3 can be partly obtained/defined also in the first body 30.

Conveniently, the internal tubular section 4 with substantially straight extension along the X axis is partially obtained/defined in the first body 30 and partially in the second body 31. Preferably, the internal tubular section 4 comprises a first part 40 which is defined and/or formed in said first body 30 and a second part 41 which is defined and/or formed in said second body 31, and in which said first part 40 and said second part 41 are coaxial and consecutive to each other.

Preferably, at least one part of the internal tubular section 4 is formed in the first body 30, i.e. in the same body which also comprises the first opening 9 and the second opening 11. Conveniently, said at least one part of the internal tubular section 4 which is formed in the first body 30 is upstream with respect to the sensor means 5.

Advantageously, this allows for a greater longitudinal extension of the internal tubular section 4, thus allowing a better linearization of the gas flow before it meets the sensor means 5. In other words, this allows to have a longer straight portion before the gas reaches the sensor means 5, thus linearizing the gas flow, and at the same time it allows to keep the overall dimensions of the device 1 limited.

Preferably, in a possible embodiment (cf. Figs. 12 - 17), the first opening 9 for the gas inlet is in fluidic connection with the inlet/upstream mouth of the tubular section 4 by means of a further external annular chamber 39 which is entirely formed only in the first body 30. Preferably, the first upstream flow conditioner 25' is housed inside said further external annular chamber 39 around the tubular section 4. Advantageously, said sensor means 5 comprise at least one ultrasonic emitter 5' mechanically mounted on an internal wall 8 of said containment structure 7, which internally defines said tubular section 4 of said path 2 for said gas, configured to generate at least one ultrasonic signal inside said tubular section 4, along a detection direction Z, angled with respect to said prevailing extension axis X.

Conveniently, the ultrasonic type sensor means 5 are mounted so that the ultrasonic signal crosses the tubular section 4 along a direction which is angled with respect to the direction of longitudinal extension X of the tubular section 4 and, in particular, is angled with respect to the direction of pass through/advancement of the gas inside the tubular section 4.

Conveniently, the sensor means 5 comprise at least one ultrasonic receiver 5", mechanically mounted on said internal wall 8, aligned with said ultrasonic emitter 5' along said direction of Z detection and configured to receive said ultrasonic signal.

Conveniently, said at least one ultrasonic emitter 5' and said at least one ultrasonic receiver 5" are mounted on corresponding diametrically opposite zones of the tubular section 4. Conveniently, said at least one ultrasonic emitter 5' and ultrasonic receiver 5" comprise at least one ultrasonic transducer.

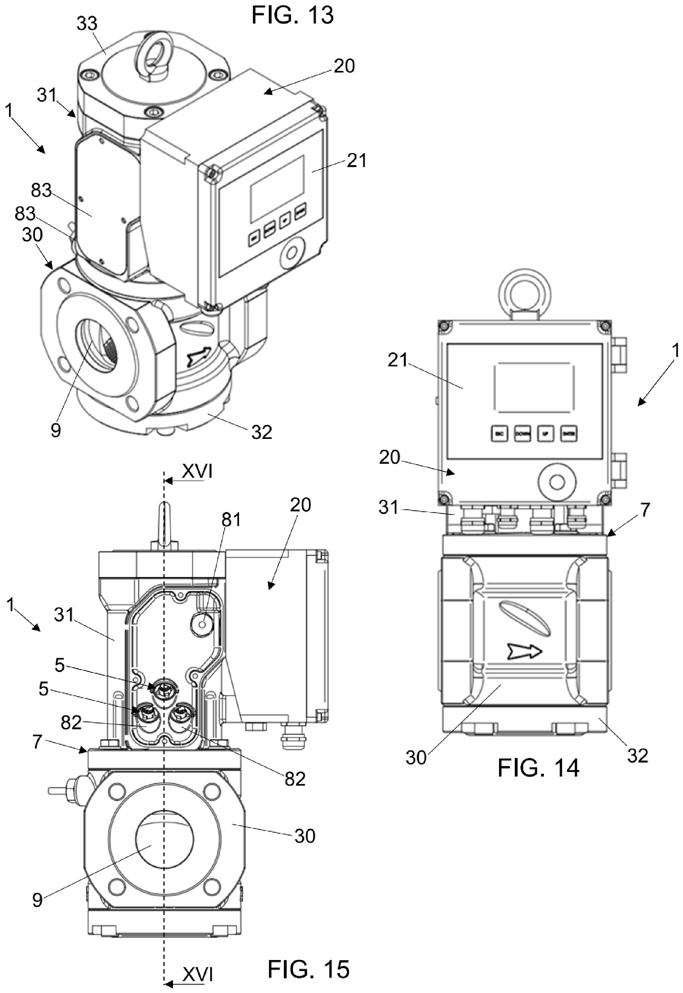

Advantageously, the sensor means 5 can comprise at least two pairs of ultrasonic emitters 5' - ultrasonic receivers 5", preferably three pairs of ultrasonic emitters 5' - ultrasonic receivers 5" (see fig. 15 and 17).

Preferably, the sensor means 5 are mounted in corresponding through seats 82 obtained in the containment structure 7 - and in particular on the second body 31 of the containment structure 7 - so as to pass through the external annular chamber 3 until reaching the inside of the tubular section 4, to thus measure the gas that/when it passes through said tubular section 4. Furthermore, the through seats 82 for the sensor means 5 are closed from the outside by a covering element 83 which is configured to be associated in a mechanically removable way (for example by interlocking, form-fit, snap-fit or similar connections) to the second body 31 of the containment structure 7. Preferably, a first covering element 83 is provided to close the through seats 82 for a first group of sensors 5' and a second covering element 83 to close the through seats 82 for a second group of sensors 5". Advantageously, the removability of the covering element 83 allows easy and rapid access to the sensor means 5 from the outside in order to be able to carry out their removal and/or replacement.

In a possible embodiment, not shown here, at least one reflector configured to reflect the ultrasonic signal emitted by the emitter 5' towards the receiver 5' can be provided. Conveniently, in this case, the emitter 5', the receiver 5" and the reflectors are mounted inside the tubular section so as to define a "V" or "W" path for the ultrasonic signal.

Advantageously, the emitter 5' and the receiver 5" of the sensor means 5 are placed to pass through the internal wall 8 and protrude inside the tubular section 4 of the path 2 with a corresponding operating surface.

Preferably, the emitter 5' and the receiver 5" of the sensor means 5 are inserted in seats obtained inside the ribs 15 and are connected to electrical connection means 16, such as in particular electric cables, which suitably protrude externally from the containment structure 7.

Preferably, said first opening 9 and said second opening 11 are mutually aligned along a direction Y which is transversal with respect to the longitudinal extension axis X of the internal tubular section 4. Preferably, said inner wall 8, defining inside it said tubular section 4 of said path 2 for said gas, is interposed between the openings 9 and 11.

In this way, the only encumbrance of the device 1 inside the pipeline is that of the linear distance (defined as "gauge") between the first opening 9 and the second opening 11, along the transverse direction Y, since the internal tubular section 4 and said at least one chamber 3 which - together define the path 2 for the gas inside the structure 7 - extend along the X axis, which is substantially perpendicular to the transverse direction Y, allowing to actually install the device according to the invention in any position of the pipe in which at least the aforementioned linear distance is available between the first opening 9 and the second opening 11.

Advantageously, the device 1 comprises a processing and/or control unit (not illustrated in the attached figures) which, preferably, is defined by an electronic board provided with a microprocessor or a microcontroller. Conveniently, the sensor means 5 can be of the electronic type and be provided with their own electronic card or be associated with a common electronic card (for example defined by the processing unit) associated with the structure 7.

Advantageously, the device 1 can also comprise a pressure sensor 80 operationally mounted on the structure 7 (preferably on the second body 31) so as to measure the pressure of the gas that crosses the internal tubular section 4. Advantageously, this allows greater precision in the subsequent conversion of the flow rate detected by the sensor means 5 to the reference thermodynamic conditions.

Advantageously, the device 1 can comprise at least one temperature sensor 81 operationally mounted on the structure 7 (preferably on the second body 31) so as to measure the temperature of the gas that crosses the internal tubular section 4 and/or that crosses the external annular chamber 3.

The device 1 also comprises at least one memory unit. Conveniently, this at least one memory unit is defined by an electronic board which houses a memory, preferably nonvolatile, for example a ROM or EPROM or EEPROM or flash memory, or also volatile, for example RAM. Advantageously, said at least memory unit can be housed inside the structure 7, but it could also be housed outside the structure 7.

Preferably, the device 1 comprises an external module 20 which is positioned externally to the structure 7 and, preferably, is associated with the external surface of a wall of said structure. Conveniently, the external module 20 is housed inside a second casing, preferably made of plastic.

Conveniently, the external module 20 comprises its own processing and/or control unit which, preferably, is defined by an electronic board (for example a printed circuit PCB) in which a microprocessor or a microcontroller is housed. In particular, the external module 20 is configured to receive the readings made by the sensor means 5 and, in particular, to receive electrical signals (preferably digital) representative of the quantities detected by the sensor means 5.

Advantageously, the external module 20 also comprises a user interface 21 - for example a push-button panel associated with a visualization display or a display, for example of the touch-screen type - configured to allow the user to interact with the external module 20. Conveniently, the data received is shown on the display and/or processed by said external module 20.

Advantageously, the external module 20 is electrically connected to the sensor means 5 by means of the aforementioned electrical connection means 16, in particular by means of electric cables placed through the containment structure 7.

Advantageously, the external module 20 also comprises remote communication means, preferably means of transmission or transceiver operation with a possible remote unit. Conveniently, said transmission or transceiver means can be of the wireless type (in particular via infrared or via radio, for example Wi-Fi). Conveniently, these transmission or transceiver means can be connected and/or integrated into the electronic card of the external module 20. Preferably, the communication means can be configured to allow the device 1 to interact and exchange data and/or information and/or commands with an external portable device (not shown), such as a smartphone or tablet. Advantageously, the communication means can be configured to allow the device 1 to interact and exchange data and/or information and/or commands with an external processing unit. Preferably, the external processing unit can define an external (remote) central unit which is configured to receive information from one or more devices 1.

Conveniently, the electrical connection means 16 comprise for example an electrical signal transmission cable, preferably a flat cable of the "FFC" type. Conveniently, the electric cable can pass from the inside to the outside of said structure 7 at a passage opening, suitably sealed, provided for housing the sensor means 5.

Advantageously, the external module 20 also comprises inside it at least one source of electrical energy for the components of the external module 20 itself (i.e. both for the external electronic unit and/or the means of remote communication) and for the components of the first module (in particular for the sensor(s)). Preferably, said at least source of electrical energy comprises at least an accumulation unit (battery or cell) which is connected directly or by means of the electronic card to the various components of the external module 20 in order to supply the electrical energy for their operation.

The memory unit is independent and external with respect to the structure of said external module 20 and, conveniently, cannot be removed together with the latter.

Advantageously, said at least the memory unit is configured to store a plurality of information relating to the manufacturing characteristics of the device 1 and its operation.

Advantageously, as mentioned, access to the memory unit is prevented by one or more seals which must necessarily be tampered with in order to access the memory unit itself. In this way, therefore, any intervention, tampering or removal of the memory unit can be suitably and immediately identified. Preferably, said seals can comprise adhesive portions, padlocks, threads, or any other means that is suitable for the purpose.

Conveniently, therefore, once the device 1 has been constructed and metrologically sealed, the memory unit is protected and cannot be altered.

From what has been said it is clear that the device 1 according to the invention is more advantageous than the traditional devices in that:
- it can be installed in any section of a gas distribution network, in particular at the final pressure reduction stations;
- it does not require straight sections upstream and/or downstream of the device itself;
- it has small dimensions;
- it obviates the need to modify the geometry of the distribution network for its installation;
- it meets the regulatory requirements for measurement accuracy, in particular for gas flow;
- it is structurally and functionally completely reliable;
- it is an improvement and/or alternative to traditional ones;
- it has high safety and operability standards;
- it can be created simply, quickly and at low costs;
- it presents an alternative characterization, both in constructive and functional terms, compared to the traditional ones.

The present invention has been illustrated and described in a preferred embodiment thereof, but it is understood that executive variations may be applied to it in practice, without however departing from the scope of protection of the present patent for industrial invention.

## Claims

1. Device (1) for measuring a fluid, preferably a gas, in particular of the type suitable for measuring the flow rate of gas or liquid circulating within a pipeline and through the device itself, comprising:
- a containment structure (7) which is provided with a first opening (9) for the inlet of the fluid inside it and a second opening (11) for the outlet of the fluid,
- said containment structure (7) being configured to define inside it a path (2) for the fluid between said first opening (9) and said second opening (11), said path (2) comprising:
- an internal tubular section (4) which extends in a substantially rectilinear way along a longitudinal axis X and which is in fluid communication with said first opening (9) for the inlet of the fluid, or with said second opening (11) for the outlet of the fluid,
- at least one external chamber (3) which is positioned around said tubular section (4) and which is in fluid communication with said second opening (11) for the outlet of the fluid, or with said first opening (9) for inlet of the fluid,
- said at least one external chamber (3) being fluidly connected with said internal tubular section (4) at a zone of the internal tubular section (4) which is opposite to that at which said tubular section is in fluid communication with said first opening (9) for the inlet of the fluid, or with said second opening (11) for the outlet of the fluid,
- sensor means (5) configured to detect a quantity of the flow of said fluid that passes through said internal tubular section (4),
said device being **characterized in that** said containment structure (7) comprises:
- a first body (30) in which said first opening (9) and said second opening (11) are formed and which is configured to be mechanically connected between an upstream pipe and a downstream pipe that are external to said device (1),
- a second body (31) in which said sensor means (5) are mounted,
and also **characterized in that**:
- said internal tubular section (4) which extends substantially rectilinearly along the longitudinal axis X is defined and/or formed partly in said first body (30) and partly in said second body (31),
- said at least one external chamber (3) being defined and/or formed, at least in part, in said second body (31).

2. Device according to claim 1, **characterized in that** said at least one external chamber (3) extends, at least in part, externally around the internal tubular section (4) and parallel with respect to said longitudinal extension axis (X) of the internal tubular section (4).

3. Device according to one or more of the preceding claims, **characterized in that** said containment structure (7) is configured so that the fluid passes through the internal tubular section (4) in a direction of travel (V2) which is substantially opposite to the direction of travel (V1) with which the fluid passes through said at least one chamber (3).

4. Device according to one or more of the preceding claims, **characterized in that** said first inlet opening (9) is in direct fluidic communication with said at least one external chamber (3) while said second outlet opening (11) is in direct fluidic communication with the internal tubular section (4), so that the flow of fluid first passes through said at least one external chamber (3) and then said internal tubular section (4).

5. Device according to one or more of the preceding claims, **characterized in that** said first inlet opening (9) is in direct fluidic communication with said internal tubular section (4) while said second outlet opening (11) is in fluidic communication with said at least one external chamber (3), so that the fluid flow first passes through said internal tubular section (4) and then said at least one external chamber (3).

6. Device according to one or more of the preceding claims, **characterized in that** said containment structure (7) comprises an internal wall (8), substantially tubular in shape, which internally delimits said internal tubular section (4), while said at least one external chamber (3) is defined externally around said internal wall (8).

7. Device according to one or more of the preceding claims, **characterized in that** it comprises at least two external chambers (3) for the subdivision of the fluid flow, said at least two external chambers (3) extending around the internal tubular section (4) and being all in fluid communication:
- with said second opening (11) for the outlet of the fluid, or with said first opening (9) for the inlet of the fluid, and
- with the same internal tubular section (4).

8. Device according to one or more of the preceding claims, **characterized in that** it comprises, inside the containment structure (7), means (29) for conditioning the flow of the fluid along the path (2) defined inside the containment structure (7).

9. Device according to the preceding claim, **characterized in that** means (29) for conditioning the flow of the fluid comprise at least one upstream flow conditioner (25) which is mounted at the internal tubular section (4) upstream of the sensor means (5), and/or at least one upstream flow conditioner (25') which is mounted externally around the internal tubular section (4), preferably at the inlet of said internal tubular section, and/or at least one upstream flow conditioner (25", 25‴) which is mounted inside the internal tubular section (4).

10. Device according to one or more of the preceding claims, **characterized in that** said sensor means (5) are of the ultrasonic type and are mounted on said second body (31) so that the ultrasonic signal passes through the tubular section (4) along a direction which is angled with respect to the longitudinal extension direction X of the tubular section (4).

11. Device according to one or more of the preceding claims, **characterized in that** said second body (31) is associated with the first body (30) by means of mechanical fixing means of a removable type which are accessible and/or operable from the outside of the device (1).

12. Device according to one or more of the preceding claims, **characterized in that** said internal tubular section (4) comprises a first part (40) which is defined and/or formed in said first body (30) and a second part (41) which is defined in said second body (31), said first part (40) and said second part (41) being coaxial and consecutive to each other.

13. Device according to one or more of the preceding claims, **characterized in that** said first opening (9) for the gas inlet is in fluidic connection with the inlet/upstream mouth of the tubular section (4) by means of a further external annular chamber (39).

14. Device according to one or more of the preceding claims, **characterized in that** said sensor means (5) are mounted in corresponding through seats (82) obtained in the second body (31) of the containment structure (7) so as to pass through the external annular chamber (3) until it reaches the inside of the tubular section (4), to thus measure the gas that/when it passes through said tubular section (4).

15. Device according to the preceding claim, **characterized in that** the through seats (82) for the sensor means (5) are closed from the outside by a covering element (83) which is configured to be associated in a mechanically removable way with the second body (31) of the containment structure (7).
